# EUROPEAN PATENT APPLICATION

(11) **EP 1 516 805 A2**
(43) Date of publication of application: **23.03.2005**
(21) Application number: 04022254.9
(22) Date of filing: 17.09.2004
(51) Int. Cl.: B62H 1/00

(54) **Simplified electro-hydraulic circuit for a motorcycle stand actuator**

(30) Priority: 17.09.2003 IT PI20030069
(71) Applicant: Doveri, Marco, 56025 Pontedera (Pisa) (IT)
(72) Inventor: Doveri, Marco, 56025 Pontedera (Pisa) (IT)
(74) Representative: Celestino, Marco

(57) **Abstract**

An electro-hydraulic circuit of an actuator (1) for a motorcycle stand, operated by an actuating member (7) movable between a first and a second position, for example a cylinder piston or a hydraulic motor, said actuator having a first mouth (1a) for a liquid passage and a second mouth (1b) for a liquid passage, for moving the actuating member (7) between said positions. The first and second mouth (1a and 1b) are associated to two different branches (15 and 15') of the hydraulic circuit. Each branch (15, 15') has a respective flow control valve (16 and 16') and is selectively fed of liquid in pressure. The propulsion of liquid is carried out by a motor (12) that feeds a reversible pump (13), which can rotate in one of the two directions indicated by the arrows, and this way gives pressure to one of the branches (15 or 15'). The flow of liquid in pressure, then, achieves selectively the flow control valve (16 or 16') and feeds the respective mouth of the actuator (15a, 15'a). When instead the flow through the duct (25) stops, because the actuating member (7) is to a limit stop, or because there is an desired or accidental interruption of the motor (12), the oil can liberally discharge with a flow of back stroke through the duct (25 or 25'), the second outlet (25a or 25'a) and the first outlet (21) or the inlet (15a, 15'a), allowing the stand to move as if the actuator (1) does not exist.

## Description

### Field of the invention

The present invention relates to the field of motorcycles and more precisely it relates to a device for actuating a motorcycle stand.

In particular, the invention relates to a simplified electro-hydraulic circuit for an actuator that lifts a motorcycle on the stand and assists also the manoeuvre of descent pushing the stand in the opposite direction, and at the same time it allows in any desired moment a manoeuvre of descent of traditional type from the stand.

### Description of the prior art

In motorcycles and in scooters the lifting manoeuvre of the vehicle on the stand always requires a certain physical force and is often tough to carry out.

An actuator is known that solves the problem, as described in W09947407, in the name of the same applicant, with an electro-hydraulic drive system. This system is based on a flow control valve that operates an actuator emptying the latter at the end of the manoeuvre or in case of interruption of the lifting manoeuvre.

It is also known an actuator, as described in EP1254829 in the name of the same applicant, with an electro-hydraulic drive that assists also the descent of the vehicle from the stand. This need is particularly felt when parking on a slope; in fact, in this case the force for causing the descent of the vehicle from the stand is remarkably higher. This actuator adopts a flow control valve in combination with an electrovalve. In particular:
- When placing the motorcycle on the stand, the flow control valve delivers liquid in pressure to the actuator, while allowing to discharge the liquid either at the end of the lifting manoeuvre or in case of any interruption of the same. The electrovalve is in rest position and allows a free flow of the liquid in and out the actuator.
- When putting the stand down, instead, the electrovalve changes position in order to direct the flow in opposite direction, so that the actuator starts the back stroke rotation of the stand from the supporting position to the rest position, up to a dead point beyond which it is not necessary to bear the weight of the vehicle for continuing the rotation.

Even if the solution of EP1254829 definitely improves the prior art, it requires the presence of an electrovalve, which is an expensive component and not ideal for being installed in a motorcycle. In fact, it requires maintenance, being a component subject to failure, and is a complication to the electrical plant.

### Summary of the invention

It is an object of the present invention to provide an electro-hydraulic circuit of a motorcycle stand actuator that does not require the presence of an electrovalve, with lower costs, less complexity of the electrical plant and higher reliability.

Another feature of the present invention is to provide an electro-hydraulic circuit of a motorcycle stand actuator that is as compact as possible, minimizing the encumbered volume and the number of hydraulic circuit portions.

According to the invention, the above described and other features are accomplished with one exemplary electro-hydraulic circuit of a motorcycle stand actuator, said actuator operating an actuating member movable between a first and a second position, having a first mouth and a second mouth for a liquid passage in pressure for moving the actuating member between said positions, characterised in that said first and said second mouth are fed of liquid by means of two different branches of a hydraulic circuit, each branch having a respective flow control valve, each branch being selectively fed of liquid in pressure.

Preferably, each flow control valve comprises a chamber where a movable dividing wall with axial through holes slides; the chamber has at least one inlet and at least a first and a second outlet, the inlet and the outlets being at opposite sides with respect to the movable dividing wall; resilient means are provided that oppose to said movable dividing wall when pushed by the liquid flowing from said inlet to said outlets through said or each axial hole; stopping means are provided that close said first outlet when said dividing wall moves owing to said flow, in this case said flow running completely towards said second outlet. In case of interruption or substantial reduction of said flow, the movable dividing wall withdraws pushed by said resilient means thus opening the first outlet.

Preferably, said actuator has a cylinder where a piston slides dividing it into a first and a second chamber, a first mouth for a liquid passage associated to said first chamber, a seconda mouth for a liquid passage associated to said second chamber, said first and said second mouth being fed of liquid by said two different branches.

In an exemplary embodiment of the invention, the flow control valve of a first branch has the second outlet connected to the first mouth, whereas the flow control valve of a second branch has the second outlet connected to the second mouth of said actuator.

In this case, the actuator is a hydraulic cylinder comprising a piston and the actuating member is a stem sliding in the stand and connected to the piston, the stem moving between an extended position corresponding to the first position to a retracted position, whereby the stand is put in the supporting position by a pulling action of the stem through a terminal abutment.

Alternatively, the flow control valve of a first branch has the second outlet connected to the second mouth, whereas the flow control valve of a second branch has the second outlet connected to the first mouth of said actuator.

In this case, the actuator is a hydraulic cylinder comprising a piston and the actuating member is a stem sliding in the stand and connected to the piston, the stem moving between an extended position corresponding to the second position to a retracted position, whereby the stand is put in the supporting position by a pushing action of the stand.

Preferably, each branch is selectively fed of liquid in pressure by a reversible hydraulic pump, having an impeller that when rotating in a first direction it delivers liquid in pressure in said first branch, and when rotating in a second direction it delivers liquid in pressure in said second branch.

Preferably, each branch has a safety valve that allows to discharge the liquid in pressure in case the liquid exceeds a predetermined pressure.

Advantageously, said movable dividing wall has said or each axial hole that from the edge of said inlet is partially closed by a unidirectional stopper with a calibrated orifice, such that when the liquid pushes from said inlet towards said second outlet, it must pass through said calibrated orifice, whereas when the liquid pushes from said second outlet towards said inlet, said stopper frees said or each axial hole through which the oil can pass with minimum flow resistance.

Preferably, said unidirectional stopper with a calibrated orifice comprises: a protrusion extending centrally from said dividing wall towards said inlet mouth, a plate ring arranged concentrically to said protrusion and in which said calibrated orifice is made, a spring that engages on said protrusion and pushes said plate against said dividing wall in order to close said or each axial hole.

### Brief description of the drawings

Further characteristics and the advantages of the actuating device and of the valve according to the present invention will be made clearer with the following description of an exemplary embodiment thereof, exemplifying but not limitative, with reference to the attached drawings wherein:
- figure 1 is a diagrammatical view of a hydraulic circuit simplified according to the invention;
- figure 2 shows a diagrammatical example not limitative of an application to a motorcycle of an actuator operated in a electrohydraulic way;
- figure 3 shows an actuator according to the invention for a stand of motorcycle with pulling stem in phase of lifting;
- figures 4 and 5 show two operative positions of the stand of figure 3;
- figure 6 is a diagrammatical view of the hydraulic actuating circuit of figure 1 mounted on the actuator of figure 3;
- figure 7 is a pushing actuator that can be used alternatively, to the actuator of figure 3 with the hydraulic circuit of figure 6, inverting the inlet and discharge mouths for the oil;
- figures 8 and 9 show two operative positions of an exemplary embodiment of the stand of figure 7;
- figure 10 is a diagrammatical view of an exemplary embodiment of the hydraulic actuating circuit of figure 1 in the presence of flow control valves with a calibrated unidirectional orifice and simplified inlet of the liquid.

### Description of a preferred exemplary embodiment

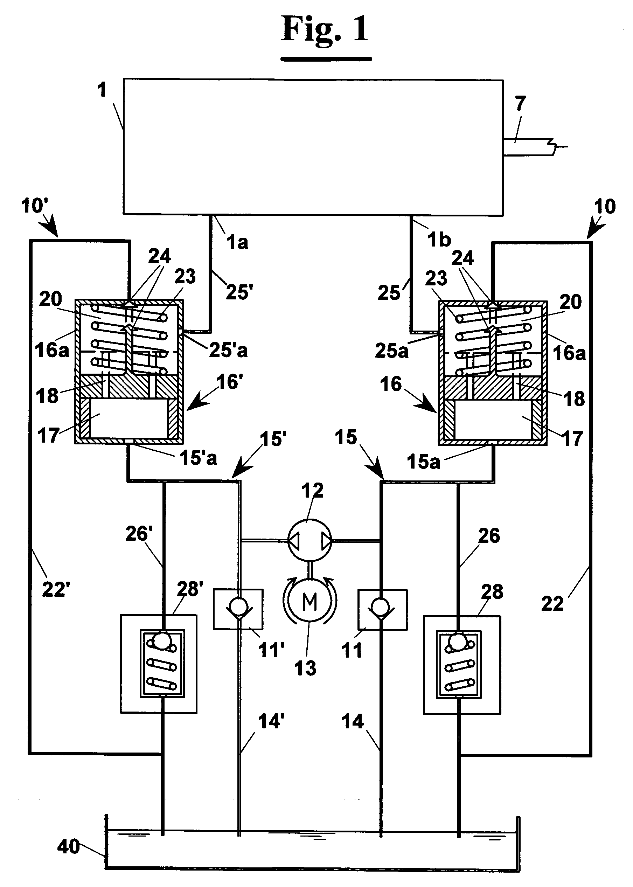

With reference to figure 1, an electro-hydraulic circuit of an actuator 1 for a motorcycle stand (shown in the following figures), operates an actuating member 7 movable between a first and a second position (which are also shown in the following figures). Actuator 1, which can be for example a cylinder/piston or a hydraulic motor, has a first mouth 1a for a liquid passage and a second mouth 1b also for a liquid passage, for moving the actuating member 7 between said positions.

According to the invention, the first and second mouth 1a and 1b are associated to two different portions 10 and 10' of a hydraulic circuit. Each portion has a respective flow control valve 16 and 16' and is selectively fed of liquid in pressure by a suction duct 14, 14' that has an intake in a reservoir 40, through a check valve 11, 11'. The propulsion of liquid is carried out by a motor 12 that feeds a reversible pump 13, which can rotate in one of the two directions indicated by the arrows, and this way gives pressure to a branch 15 or 15'. The flow of liquid in pressure, then, achieves selectively the flow control valve 16 or 16'.

More precisely, each valve 16 or 16', as known from W09947407, has an inlet 15a, 15'a that leads to a chamber 17 separated from another chamber 20 by a movable dividing wall 19 having holes 18. The movable dividing wall 19 is pushed back towards chamber 17 by a spring 23 and has a needle 24 suitable for engaging with a first outlet 21, stopping it. The chamber 20 has said first outlet 21 connected to a duct 22 (or 22') for discharging in the reservoir 40, and a second outlet 25a (or 25'a) that leads to a duct of a second outlet 25 (or 25') for delivering oil in pressure towards actuator 1.

Between the discharging ducts 22, 22' and the branches 15, 15' a safety valve 28, 28' is advantageously provided calibrated at a pressure higher than the maximum necessary for operating.

Turning on motor 13, which rotates in either directions, the pump 12 delivers then oil in pressure to chamber 17 of valve 16 or 16' through either branch 15 or 15'. The oil, through the holes 18 of piston 19, passes through chamber 20 of valve 16 or 16' and, through first outlet 21, can go back to the reservoir 40 through discharging duct 22 or 22'. The discharging flow, however, ceases immediately and automatically because the flow resistance to which the oil flow is subject when crossing the holes 18 of movable dividing wall 19 creates on the movable dividing wall same a force that, exceeding the reaction of spring 23, moves it towards chamber 20 so that the needle 24 can stop first outlet 21.

Being the discharging flow 22 thus discontinued, the oil in pressure is necessarily delivered, through second mouth 25a or 25'a of chamber 20 and through duct 25 or 25', to actuator 1. While the actuating member 7 is moving, the flow resistance of the oil towards the chamber 9 of actuator 1, passing through the holes 18 of piston 19, continues to keep closed outlet 21 by needle 24, assisted also by the pressure of the oil that acts on the head of needle 24 same.

When, instead, interrupting the flow through duct 25, either because the actuating member 7 has ended its stroke, or because there is a desired or accidental interruption of motor 12, the spring 23 returns quickly piston 19 back, releasing first outlet 21 from needle 24. The oil can freely discharge with a flow of back stroke through duct 25 (or 25'), second outlet 25a (or 25'a) and first outlet 21, up to reaching discharging duct 22 (or 22').

With reference to figures from 2 to 5, in a first exemplary embodiment of the hydraulic circuit according to the invention, a actuating cylinder 1 is connected at an end to the frame 2 of a motorcycle through a hinge 3, and at the other end to a stand 4.

More precisely, to stand 4 a fork lever 5 is integral, in the present example angled with respect to the plane of the stand, in which a cylindrical pivot 6 can rotate. The actuating cylinder 1 is associated to a stem 7 sliding in pivot 6. The stem 7 has at the end a piston 7a sliding in cylinder 1 and a head 7b of abutment against pivot 6.

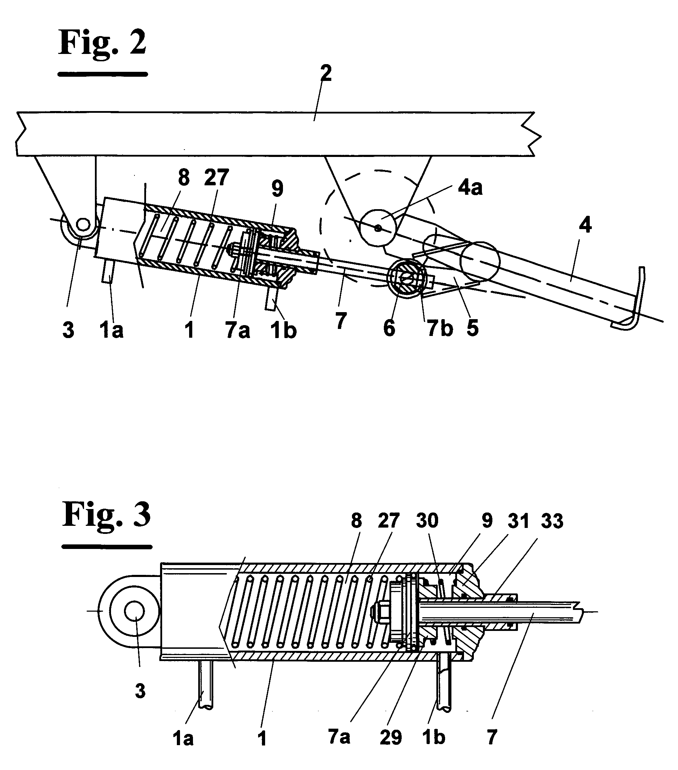

With reference also to figure 3, the piston 7a separates two chambers 8 and 9 within cylinder 1, in communication with respective mouths 1a and 1b for the passage of oil towards/away from a circuit shown hereinafter. In chamber 8 a spring 27 is present that adapted to push piston 7a towards mouth 1b and then stem 7 out from cylinder 1. In chamber 9 instead a plate 29 is present connected to a short tube 33 free to sealingly slide in the head 31 of cylinder 1 and in which in turn stem 7 sealingly slides. The motion of plate 29 towards head 31 is biased by a spring 30.

For moving the stand 4 from the rest position of figure 2 up to the position of raised vehicle shown in figure 3, the same system is used described in W09947407, in the name of the same applicant.

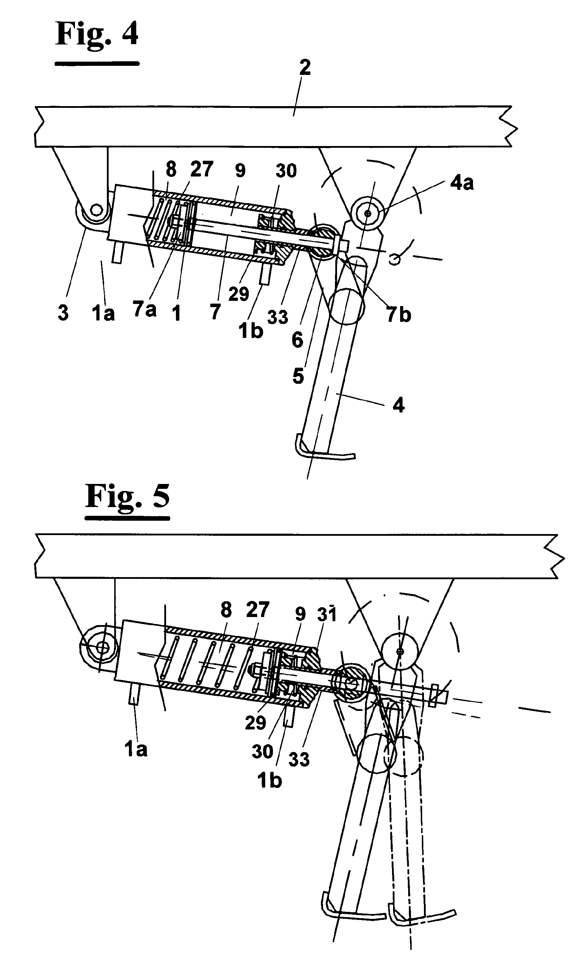

In summary, head 7b abuts against pivot 6 when the pressure of the oil delivered in chamber 9 through mouth 1b, delivered by the pump 13 in the branch 10 of figure 5, moves the piston 7a with the stem 7 to it integral towards the left direction of figure 3, so that stem 7, through head 7b and pivot 6, pulls lever 5 up to full rotation of the stand with respect to frame 2.

When the oil flow stops, for a stop of the delivery through branch 10 of figure 5, the oil is discharged and allows piston 7a, pushed by spring 27 present in chamber 8, to go back to the starting position, shown in figure 4. In this case, the stand 4 is released by the actuator and the motorcycle, supported by the stand 4, can be freed from the stand same as it happens in motorcycles not equipped with the system according to the invention.

Starting from the position of figure 4, indicated as a continuous line, when the oil is instead delivered in pressure in the branch 10' of figure 5, it reaches chamber 8 through mouth 1a and chamber 9 can discharge the oil through mouth 1b, and piston 7a pushes by plate 29 short tube 33 against lever 5 and thus moves the stand 4 from its position of raised vehicle, indicated as continuous line. In particular, the stroke of short tube 33 causes stand 4 to go beyond the position of dead point, indicated as dotted line always in figure 4, after which the vehicle 2 descends to the ground by its own weight. When the oil flow ceases, spring 30 returns short tube 33 in the position shown in figure 2, independently from the motion of the stand.

The spring 30, which may be provided, allows to maintain short tube in chamber 9 and then in correct position when the vehicle is running.

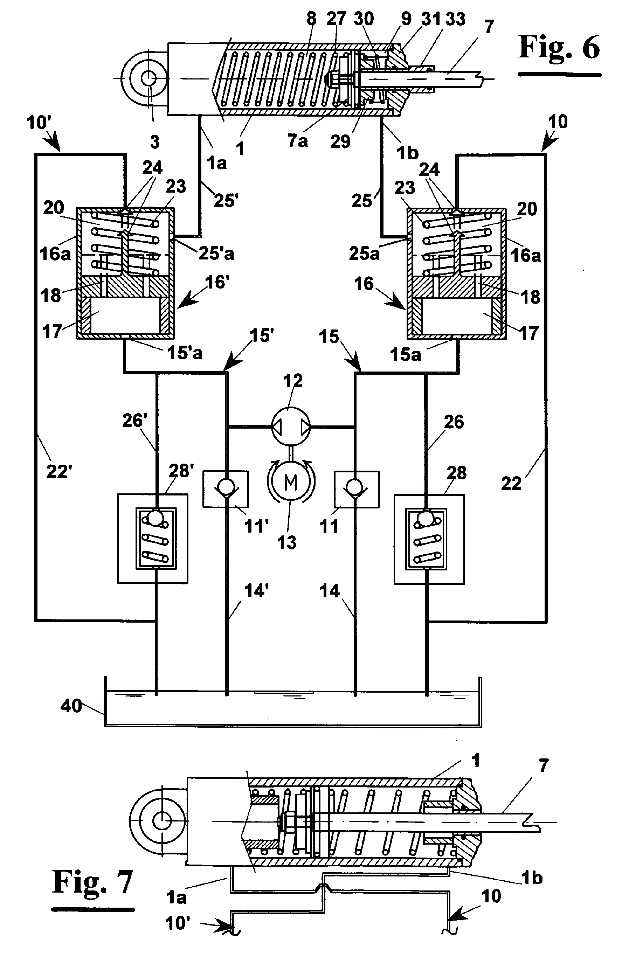

Notwithstanding reference has been made to an actuator 1 that causes the motion of stand 4 by pulling stem 7, it is obviously possible to provide in a way completely equivalent an actuator that works pushing the stem for causing the motion of the stand from the rest to the lifting position and vice-versa. As shown in figure 7, in fact, it is possible to use a pushing actuator with the same hydraulic circuit of figures 5 or 6, inverting the inlet and discharge ducts of the oil. In this case, the mouth 1a is connected to branch 10 and the mouth 1b is connected to branch 10'.

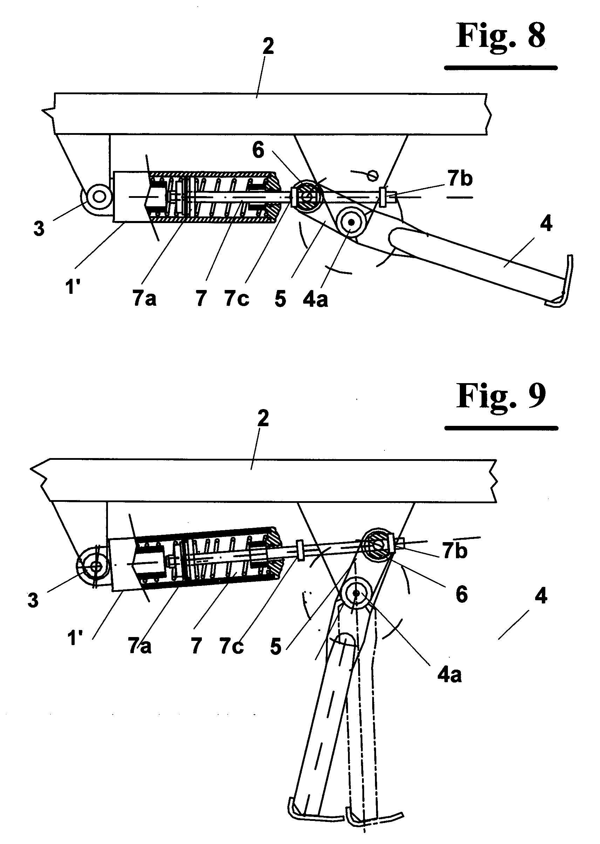

As shown in figures 8 and 9, a diagrammatical view of a stand arranged with a pushing actuator when lifting as of figure 7 has lever 5 opposite to stand 4 with respect to hinge 4b. In this case an actuator is provided 1' that pushes instead of pulling when raising vehicle 2. In this case the mechanics to cause the descent of the vehicle from the stand provides on stem 7 a pawl 7b and a pawl 7c. This way, when lifting stem 7 pushes the stand by pawl 7c, whereas when descending from the stand the stem 7 pulls the stand by pawl 7b for a small rotation up to the dead point of figure 9. The hydraulic circuit for this type of diagrammatical view can be that of figure 6, with reversing the ducts of mouths 1a and 1b.

Notwithstanding reference has been made to a stand with actuator before the stand same in the direction of movement and in position substantially horizontal, it is also possible within the scope of the present invention that the actuator is behind the stand or arranged vertically or obliquely with respect to the stand. In such different situations, the position of pierced pin 6 can be changed and alternatively, pulling or pushing actuators can be used, in a way obvious for a skilled person.

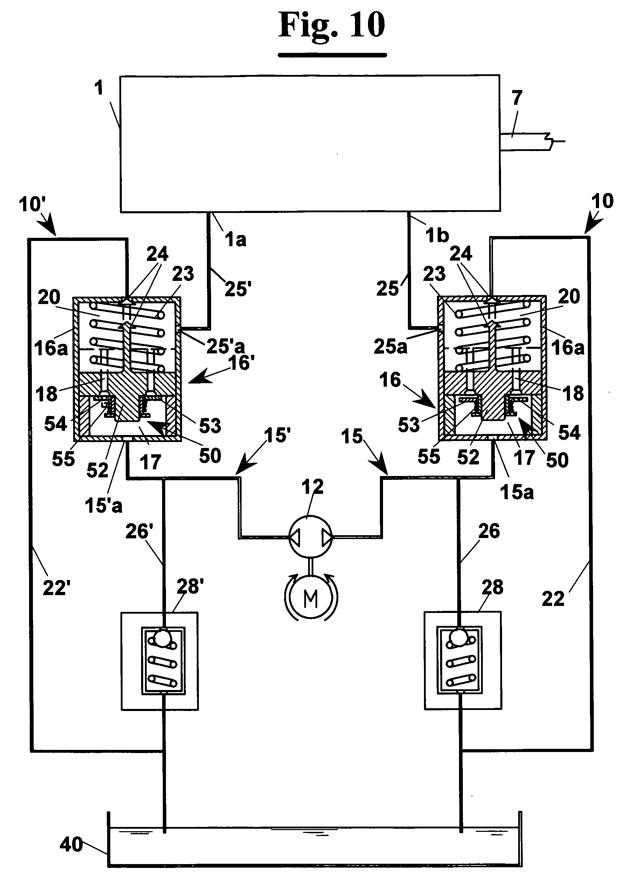

With reference to figure 10, in a preferred exemplary embodiment of the invention, the movable dividing wall 19 has axial holes 18 that are partially closed by a unidirectional stopper 50 with a calibrated orifice from the side of the inlet, 15a or 15'a. The dividing wall 19 has, in this case, a protrusion 52 extending centrally towards inlet 15a or 15'a and about which a plate ring 53 is concentrically arranged that has a calibrated orifice 54. A spring 55 engages on the protrusion 52 and pushes the plate against the dividing wall 19, in order to close axial holes 18, except from the single passage allowed by the calibrated orifice 54.

This way, when the oil pushes from branches 15, 15' through inlet 15a or 15'a towards second outlet, 25a or 25'a, it must pass through calibrated orifice 54. Instead, when the oil pushes from second outlet, 25a or 25'a, towards inlet 15a or 15'a and branches 15, 15', the plate 53 of the stopper 50 exceeds the weak force of the spring 55 and slides on protrusion 52, which works as guide, releasing axial holes 18. In this case, then, the oil passes freely with minimum flow resistance through axial holes 18.

Therefore, the holes 18 of valves 16 and 16' can be made of diameter larger than that shown in figure 1 or 6, allowing an exchange of oil directly from the first to the second mouth of passage, 1a and 1b, and vice-versa. In other words, when the stem 7 of piston 1 is pushed out, the oil coming from branch 15' enters valve 16' through mouth 15'a in the way above described, and must pass through calibrated orifice 54, for crossing dividing wall 19. Then, it achieves actuator 1 through the mouth 1a and pushes out stem 7. Owing to this action, the oil that exits through actuator 1 through mouth 1b achieves valve 16, crosses easily dividing wall 19 through holes 18 and exits through mouth 15a, feeding through branches 15 and 15' directly oil from valve 16'. The same situation, in an opposite direction, occurs when stem 7 has to be withdrawn, with direct passage of oil from mouth 1a to mouth 1b through branches 15', 15 and valves 16' and 16. This way, it is possible to eliminate ducts 14 and 14', as well as valves 11 and 11', of figures 1 and 6, with considerable savings.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. An electro-hydraulic circuit of a motorcycle stand actuator (1), said actuator (1) operating an actuating member (7) movable between a first and a second position, between a first mouth (1a) for a liquid passage and a second mouth (1b) for a liquid passage for moving the actuating member (7) between said positions, **characterised in that** said first (1a) and said second mouth (1b) are fed of liquid by means of two different branches (15, 15') of a hydraulic circuit, each branch having a respective flow control valve (16, 16'), each branch being selectively fed of liquid in pressure (M).

2. Electro-hydraulic circuit according to claim 1, wherein each flow control valve (16, 16') comprises a chamber (17, 20) wherein a movable dividing wall (19) slides having at least one axial through hole (18), said chamber (17, 20) having at least one inlet (15a, 15' a) and at least a first and a second outlet (25a, 25'a), the inlet (15a, 15'a) and the outlets (21, 25a, 25'a) being at opposite sides with respect to the movable dividing wall (19), resilient means being provided (23) that oppose to said movable dividing wall (19) when pushed by liquid flowing through said or each axial hole (18) from said inlet (15a, 15'a) to said outlets (21, 25a, 25'a); stopping means (24) of said first outlet (21) being furthermore provided associated to said movable dividing wall (19) in presence of said flow, in this case said flow runs completely through said second outlet (25a, 25'a), while in case of interruption or substantial reduction of said flow, said movable dividing wall (19) is pushed back by said resilient means (23) and opening said first outlet (25a, 25'a).

3. Electro-hydraulic circuit according to claim 1, wherein said actuator (1) has a cylinder where a piston slides dividing it into a first and a second chamber (8, 9), a stem actuating member (7) sliding in the stand and connected to the piston (7a), a first mouth (1a) of passage of liquid associated to said first chamber (8), a second mouth (1b) of passage of liquid associated to said second chamber (9), said first (1a) and second mouth (1b) being fed of liquid by said two different branches (15, 15').

4. Electro-hydraulic circuit according to claim 3, wherein the flow control valve (16) of a first branch (15) has the second outlet (25a) connected to the first mouth (1a), whereas the flow control valve (16') of a second branch (15') has the second outlet (25'a) connected to the second mouth (1b) of said actuator (1).

5. Electro-hydraulic circuit according to claim 4, wherein said stem (7) moves between an extended position corresponding to the first position to a retracted position, whereby the stand is put in the supporting position by pulling the stem and through an end abutment thereof.

6. Electro-hydraulic circuit, according to claim 3, wherein said flow control valve (16) of a first branch (15) has the second outlet (25a) connected to the second mouth (1b), whereas the flow control valve (16') of a second branch (15') has the second outlet (25'a) connected to the first mouth (1a) of said actuator (1).

7. Electro-hydraulic circuit according to claim 6, wherein said stem (7) moves between an extended position corresponding to the second position to a retracted position, whereby the stand is put in the supporting position by a pushing action of the stand.

8. Electro-hydraulic circuit according to claim 1, wherein each branch (15, 15') is selectively fed of liquid in pressure by a reversible hydraulic pump (M), which when rotating in a first direction delivers liquid in pressure in said first branch (15), and when rotating in a second direction delivers liquid in pressure in said second branch (15').

9. Electro-hydraulic circuit according to claim 1, wherein said movable dividing wall (19) has said or each axial hole (18) that from the edge of said inlet (15a, 15'a) is partially closed by an unidirectional stopper (50, 53) with a calibrated orifice (54), such that the liquid must pass through said calibrated orifice (54) when it pushes from said inlet (15a, 15'a) towards said second outlet (25a, 25'a), whereas said stopper (50, 53)) frees said or each axial hole (18) when the liquid pushes from said second outlet (25a, 25'a) towards said inlet (15a, 15'a), so that the liquid moves with minimum flow resistance through said or each axial hole (18).

10. Electro-hydraulic circuit according to claim 1, wherein said unidirectional stopper with a calibrated orifice comprises a protrusion (52) extending centrally from said dividing wall (19) towards said inlet (15a, 15'a), a plate ring (53) arranged concentrically to said protrusion (52) and in which said calibrated orifice is made (54), a spring (55) that engages on said protrusion (52) and pushes said plate (53) against said dividing wall (19) in order to close said or each axial hole (18).
